# EUROPEAN PATENT SPECIFICATION

(11) **EP 3 466 091 B1**
(45) Date of publication and mention of the grant of the patent: **04.05.2022**
(21) Application number: 17724354.0
(22) Date of filing: 18.05.2017
(51) Int. Cl.: H04N 21/81, H04N 21/845, H04N 21/218, G06F 3/147, H04N 21/2343, H04N 21/8543

(54) **METHOD, DEVICE, AND COMPUTER PROGRAM FOR IMPROVING STREAMING OF VIRTUAL REALITY MEDIA CONTENT**
VERFAHREN, VORRICHTUNG UND COMPUTERPROGRAMM ZUR VERBESSERUNG DES STREAMINGS VON MEDIENINHALTEN FÜR VIRTUELLE REALITÄT
PROCÉDÉ, DISPOSITIF ET PROGRAMME INFORMATIQUE DESTINÉS À AMÉLIORER LA DIFFUSION EN CONTINU DE CONTENU MULTIMÉDIA DE RÉALITÉ VIRTUELLE

(30) Priority: 23.05.2016 GB 201609058
(43) Date of publication of application: 10.04.2019
(73) Proprietor: Canon Kabushiki Kaisha, Tokyo 146-8501 (JP)
(72) Inventor: OUEDRAOGO, Naël, 35330 Maure De Bretagne (FR); DENOUAL, Franck, 35190 Saint Domineuc (FR); TAQUET, Jonathan, 35160 Talensac (FR)
(74) Representative: Santarelli
(86) International application number: PCT/EP2017/062051
(87) International publication number: WO 2017/202700

(56) References cited:
- EP-A1- 2 824 885
- WO-A1-2015/197815
- EMMANUEL THOMAS ET AL: "5G and future media consumption [5G/Beyond UHD]", 114. MPEG MEETING; 22-2-2016 - 26-2-2016; SAN DIEGO; (MOTION PICTURE EXPERT GROUP OR ISO/IEC JTC1/SC29/WG11),, no. m37604, 20 February 2016 (2016-02-20), XP030065969,
- "Technologies under Considerations for Omnidirectional Media Application Format", 114. MPEG MEETING;22-2-2016 - 26-2-2016; SAN DIEGO; (MOTION PICTURE EXPERT GROUP OR ISO/IEC JTC1/SC29/WG11),, no. N15946, 3 March 2016 (2016-03-03), XP030022620,
- "Draft Text of ISO/IEC 23009-1 3rd edition", [Online] 8 December 2015 (2015-12-08), 113. MPEG MEETING; 20151019 - 20151023; GENEVA; (MOTION PICTURE EXPERT GROUP OR ISO/IEC JTC1/SC29/WG11),, XP030268210, Retrieved from the Internet: URL:http://phenix.int-evry.fr/mpeg/doc_end _user/documents/113_Geneva/wg11/w15686-v2- w15686.zip Draft - ISO_IEC_23009-1_2016(E)-Word_document - COR.1 + AMD.1 + AMD.2 + COR.2 + SDAM.3 + PDAM.4 - diff-112.doc> [retrieved on 2015-12-08]

## Description

### FIELD OF THE INVENTION

The invention generally relates to the field of timed media data streaming over communication networks, for example communication networks conforming to Internet Protocol (IP) standard. More particularly, the invention concerns methods, devices, and computer programs for improving streaming of virtual reality or omnidirectional media data, over IP networks using the HyperText Transfer Protocol (HTTP).

### BACKGROUND OF THE INVENTION

Video coding is a way of transforming a series of video images into a compact digitized bit-stream so that the video images can be transmitted or stored. An encoding device is used to code the video images, with an associated decoding device being available to reconstruct the bit-stream for display and viewing. A general aim is to form the bit-stream so as to be of smaller size than the original video information. This advantageously reduces the capacity required of a transfer network, or storage device, to transmit or store the bit-stream code. To be transmitted, a video bit-stream is generally encapsulated according to a transmission protocol that typically adds headers and check bits.

Streaming media data over a communication network typically means that the data representing a media presentation are provided by a host computer, referred to as a server, to a playback device, referred to as a client device, over the communication network. The client device is generally a media playback computer implemented as any of a variety of conventional computing devices, such as a desktop Personal Computer (PC), a tablet PC, a notebook or portable computer, a cellular telephone, a wireless handheld device, a personal digital assistant (PDA), a gaming console, a head-mounted device, and the like. The client device typically renders a streamed content as it is received from the host (rather than waiting for an entire file to be delivered).

A media presentation generally comprises several media components such as audio, video, text, metadata and/or subtitles that can be sent from a server to a client device for being jointly played by the client device. Those media components are typically encoded individually into separate media streams and next, they are encapsulated into multiple media segments, either together or individually, and sent from a server to a client device for being jointly played by the latter.

A common practice aims at giving access to several versions of the same media component so that the client device can select one version as a function of its characteristics (e.g. resolution, computing power, and bandwidth). According to the existing proprietary solutions each of the alternative versions is described and media data are split into small temporal segments. Segments can be media segments containing the compressed or raw data for the different media or can be initialization segments that are used to set up, instantiate, and initialize media decoders in a client.

In the context of the dynamic and adaptive streaming over HTTP, a standard called DASH (Dynamic Adaptive Streaming over HTTP) has emerged from the MPEG standardization committee ("ISO/IEC 23009-1, Dynamic adaptive streaming over HTTP (DASH), Part1: Media presentation description and segment formats"). This standard enables association of a compact description of the media content of a media presentation with HTTP Uniform Resource Locations (URLs). Such an association is typically described in a file called a manifest file or a description file. In the context of DASH, this manifest file is an XML file also called the MPD file (Media Presentation Description). There are other manifest-based streaming solutions like Smooth Streaming, also using XML file, or like HTTP Live Streaming rather using plain text file for the manifest, also called playlist. As preferred embodiments, DASH is used as streaming protocols however, the descriptive information added in the manifest would provide the same effects in these other solutions.

Manifest files gather a set of descriptors that specify descriptive information on the media samples described in the manifest. A descriptor may be structured elements like for example XML nodes (elements and/or attributes) or may be described with JSON (JavaScript Object Notation) or even in plain text format provided that keywords or comments are dedicated to convey these descriptors.

By receiving a manifest file, a client device gets the description of each media content component. Accordingly, it is aware of the kind of media content components proposed in the media presentation and knows the HTTP URLs to be used for downloading the associated initialization and/or media segments. Therefore, the client device can decide which media content components to download (via HTTP requests) and to play (i.e. to decode and to play after reception of the media segments).

In addition to such an association, the DASH standard proposes to split each media content as a function of periods of time. The time decomposition is described in the MPD file. Accordingly, the latter defines the association between HTTP URLs and the compact description of each component from media content over each period of time. Each media content component can be encapsulated into multiple independent media segments corresponding to these periods of time.

This standard allows a client to download desired media content components of a media presentation over desired periods of time.

The encapsulation file format used for streaming media content components within media segments in MPEG DASH may conform the ISO Base Media File Format defined in the context of the MPEG standardization activity. In particular, the encapsulation file format may relate to the standardization of the encapsulation of the High Efficiency Video Coding (HEVC) and its scalable extension in the ISO Base Media File Format (ISO/IEC 14496 Part 15). It is to be noted that DASH is agnostic to the encapsulation file format. For example, MPEG-2 Transport stream can be used or WebM or Common Media Application Format to encapsulate the media streams.

It is to be noted that extraction/streaming and displaying of regions of interest relying on tile composition is particularly useful for enabling interactive high quality zoom-in functions during streaming, for example by allowing a user to click on specific areas in video sequences to give access to a higher resolution video for the specific selected areas, or to navigate/pan into the video sequence from one spatial area (or tile) to another.

It is to be recalled that video resolution continuously increases, going from standard definition (SD) to high definition (HD), and to ultra-high definition (e.g. 4K2K or 8K4K). Video sequences can be encoded using either a single-layer (e.g. HEVC) or a multi-layer (e.g. Scalable HEVC) coding standard. In case of multi-layer coding format, a given layer can be used as reference data for one or more other layers. The layered video organization can be efficiently represented using multiple dependent media content components, each component representing a video layer at a different level of scalability. In order to decode a given media content component, a client device must have access to the media content component itself but also to all media content components it depends on.

It is also to be recalled that there is a proliferation of mobile and connected devices with video streaming capabilities. Accordingly, splitting the video sequences into tiles becomes important if a user of a mobile device wants to display or to focus on sub-parts of a video sequence by keeping or even improving the quality. By using tiles, a user can therefore interactively request spatial sub-parts (or portions or regions) of the video sequence. In case of scalable video coding format (e.g. scalable HEVC or multi-view HEVC), each video layer can also be organized into multiple independent spatial sub-parts except that coding dependencies may exist between tiles of an enhancement layer and one or more tiles of a base layer.

In addition, the use of wide screens and also of head mounted devices such as goggles is growing rapidly and provides an immersive experience to the user. Moreover, to provide an immersive experience on traditional 2D screens, some media players provide a specific user interface which makes it possible for the client to pan into the video through a navigation menu. Several devices are currently available to immerse the user in a virtual reality (VR) environment. VR video sequences or omnidirectional video sequences are generally captured either with one camera mounted with at least one wide angle objective which films a wide area or also by several synchronized cameras which capture video and audio data in various directions. In the latter case, the resulting multiple video sequences are then transformed to form a single video sequence generally called the Panorama video sequence. Considering for example each camera having 4K resolution, the resulting panorama video sequence may have a resolution greater than 10K, which complicates its processing (in terms of computation, memory storage, transfer, and even network transfer).

The encapsulation of such video sequences in a file format can be done for instance based on the Omnidirectional File Format Specification or with the ISO Base Media File Format.

The variety of display devices for instance large screen or head mounted displays (HMDs) with different processing and display capabilities creates a need of a streaming solution which can adapt to all the devices in particular in the context of adaptive streaming over HTTP. In particular, HMD's display size is generally lower than wide large screen's. Consequently, spatial access to subparts (or portions or regions) of a Panorama video sequence avoids sending the entire Panorama video sequence for display with a HMD device.

EP 2824685 A1 discloses a content delivery network in which manifest files are specified in a hierarchical structure. This allows to select tiles or regions of interest (ROIs) to be requested for adaptive streaming.

WO 2015/197815 A1 discloses that in an HEVC tiled video stream ROIs are provided. The multiple presentation description (MPD) file is adapted such that it supports the signalling of sub-regions consisting of several tiles.

Therefore, there is a need for optimizing streaming of virtual reality or omnidirectional media data as a function of client needs and characteristics.

### SUMMARY OF THE INVENTION

The present invention has been devised to address one or more of the foregoing concerns.

In this context, there is provided a solution for adaptive streaming of virtual reality media content, for example over an IP network such as Internet using the http protocol.

According to the invention, there is provided a method for receiving media data complying with an omnidirectional media format, a method for providing media data complying with an omnidirectional media format, a computer program comprising instructions for carrying out the steps of the method for receiving media data complying with an omnidirectional media format, a computer program comprising instructions for carrying out the steps of the method for providing media data complying with an omnidirectional media format, a client device for receiving media data complying with an omnidirectional media format, and a server device for providing media data complying with an omnidirectional media format, according to the appended claims.

Therefore, the invention makes it possible to optimize transmission of virtual reality media data since only the required data are transmitted, to improve quality since high resolution images can be handled, and to preserve scalability at the server's end since the control of the data to be transmitted is performed by the clients. Moreover, according to the invention, clients need less resources.

Since the present invention can be implemented in software, the present invention can be embodied as computer readable code for provision to a programmable apparatus on any suitable carrier medium, and in particular a suitable tangible carrier medium or suitable transient carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Further advantages of the present invention will become apparent to those skilled in the art upon examination of the drawings and detailed description. It is intended that any additional advantages be incorporated herein.

Embodiments of the invention will now be described, by way of example only, and with reference to the following drawings in which:
**Figure 1****,** comprising Figures 1a, 1b, and 1c, illustrates schematically the characteristics of panorama video sequences;
**Figure 2** illustrates a general principle of media streaming over HTTP, on which embodiments of the invention are based;
**Figure 3a** illustrates steps for generating a media presentation and a corresponding manifest file;
**Figure 3b** illustrates steps for receiving a manifest file and selecting a media stream;
**Figure 4** illustrates an example of structure of manifest files in the DASH context; and
**Figure 5** is a schematic block diagram of a computing device for implementation of one or more embodiments of the invention.

### DETAILED DESCRIPTION OF EMBODIMENTS OF THE INVENTION

According to embodiments, the invention makes it possible to provide description of segments of virtual reality or omnidirectional media contents in a streaming manifest or streaming playlist, so that segments having characteristics corresponding to the ones needed by a client may be requested. Such characteristics may comprise, in particular, fields of view, viewpoints, and relative quality information to allow dynamic adaptation.

In the context of DASH, and as a preferred embodiment, the ISO BMFF standard is used to encapsulate media contents into media data segments in order to form streaming manifest: the media presentation description (MPD). Generally, using DASH, each track is described in the manifest as independent media content.

However, it has been observed that in order to determine a specific encoding configuration of a VR video sequence described in a MPD (for example via OMAF definitions as a metadata track), a user must download a first initialization segment (in addition to the manifest). Next, the user must download, at the minimum, the beginning of each first media data segment of each video content to retrieve the encoding configuration of the VR video content and also download the metadata track containing the metadata samples which specifies the VR content characteristics. The downloading of this initialization information leads to delays and additional HTTP roundtrips. Due to these delays, a user has to wait before starting viewing the media presentation.

To solve these issues, all the virtual reality media content components having various configurations in terms of quality are described in a compact manner in the manifest. In such a way, the association between a specific coding configuration and/or a specific quality level and HTTP URLs can be established and the downloading of the video segments is carried out optimally with respect to all video segment alternatives. In other words, embodiments of the invention make it possible to express precisely the coding configurations (and also the quality) within the different media streams described in the manifest or playlist and to indicate to streaming clients what must be downloaded and what could be optionally downloaded when selecting a video version.

As mentioned above, there exist new kinds of video sequences that are generated to provide immersive experience to end users. Such video sequences may be captured by using "fish eye" objective lens or using several cameras that are placed on a special rig to acquired images according to several directions. According to the latter configuration, the obtained images are stitched to form panorama images of a wide scene (these panorama images being directly obtained when using "fish eye" objective lens").

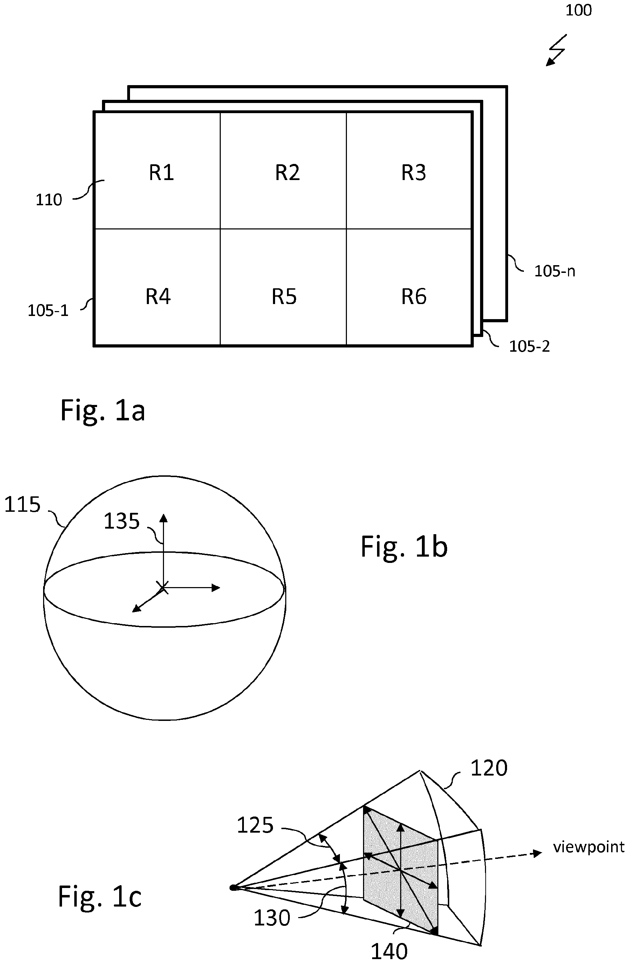

**Figure 1****,** comprising Figures 1a, 1b, and 1c, illustrates schematically the characteristics of panorama video sequences also called a multi-directional, a pluri-directional, an omnidirectional, a 360°, or a virtual reality video sequence.

In the following, it is considered that a wide view is a view of a scene of which images are acquired, this wide view corresponding to a greater optic angle (wide angle) than commonly used. For the sake of illustration, a 180-degree panorama is considered as a wide view. Another example is a 360° wide view along a horizontal axis (and possibly also 360° in vertical axis) which forms an immersive view of the filmed scene. The images corresponding to such wide views are typically used for virtual reality. It is noted that 360° view may also be a computer generated synthetic sequence.

In view of the wide angle, panorama video sequences generally require geometrical projections prior to being displayed so as to conserve appropriate proportions. It is to be noted that a used projection may not reflect the reality and may rather be an artistic representation of a wide view (i.e. little planet photography effect that is based on a stereographic projection https://en.wikipedia.org/wiki/Stereographic_projection).

The captured (or computed) images and sequences of images from the wide view form panorama images and panorama image sequences, respectively.

For example, the video 100 of Figure 1a is composed of a sequence of panorama images 105-1 to 105-n. These panorama images result from the projection of the wide view onto the 2D plan of the images.

Each panorama video or panorama image is thus associated with a specific geometric projection, or panorama projection, that is a geometric transformation of a (or part of) 3D spherical scene surrounding a point of reference into a 2D map. Several types of projections exist among which (which is a non-limitative list):
- the spherical projection;
- the squished spherical projection;
- the cylindrical projection;
- the cubical projection;
- the pyramidal projection; and
- no projection used

It is noted here that there exist projections that may generate a noncontinuous map of pixels. For the sake of illustration, the cubical projection consists as a whole in six projection areas each corresponding to one face of a cube.

A panorama region is a subset of pixels, that may be of a rectangular shape or not, of a panorama image. Each panorama region results from a specific type of panorama projection type. For example, considering a cubical projection, each region of a panorama image may correspond to one face of a cube.

Turning back to Figure 1a, panorama image 105-1 is issued from a cubical projection. It is thus divided into six areas R1 to R6. Each of these areas is a panorama region, generically referenced 110, that corresponds to one face of a cube.

As illustrated in Figure 1b, rendering of a 360° panorama image on a display consists as a whole in transforming the panorama image through a projection onto a display to allow immersive observation of a 3D wide view that may be represented as a sphere 115.

As illustrated in Figure 1c, depending on the characteristics of the display, only a portion 120 of the 3D sphere representing the 3D wide view may be viewed. This portion is determined by a field of view (FOV) of the display. This FOV is parameterized by the two observation angles of the portion, for example with a horizontal FOV angle 125 and a vertical FOV angle 130. Another parameterization is the horizontal FOV and diagonal FOV angles.

The observation direction of the projection of a version of wide view on a sphere surface in a predetermined 3D frame reference (e.g. 3D frame reference 135 in Figure 1b) is denoted the viewpoint. A viewport 140 is a 2D image which corresponds to the projection of a panorama image (projected on a 3D sphere) according to a particular viewpoint and a specific FOV.

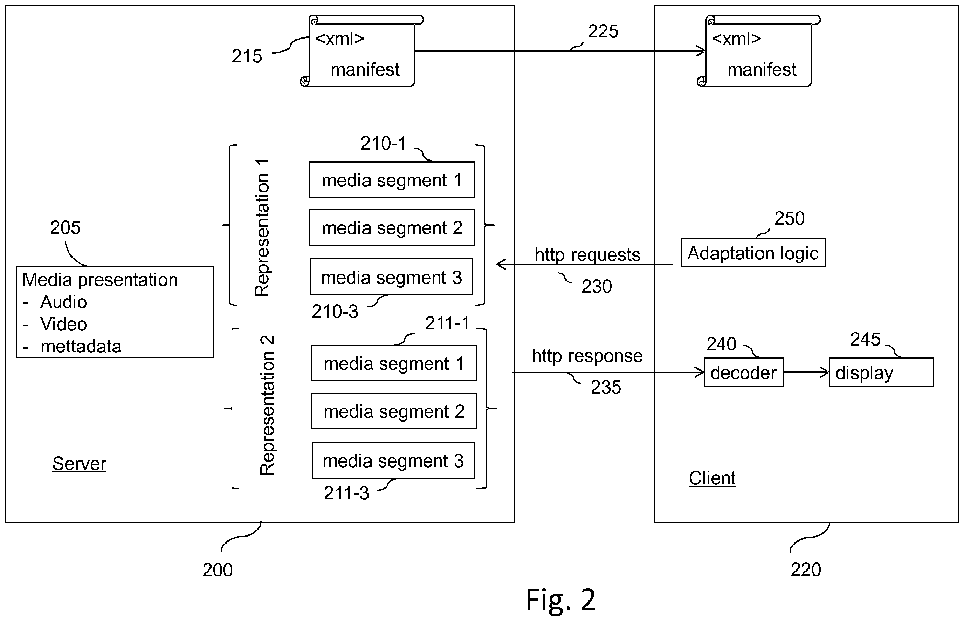

**Figure 2** illustrates a general principle of media streaming over HTTP, on which embodiments of the invention are based.

As illustrated, media server 200 comprises media presentations among which, in particular, media presentation 205 that contains different media content components, e.g. audio and video data streams. Audio and video streams can be interleaved or stored independently. The media presentation can propose alternative versions of media content components (with different bitrate, quality, resolution, sampling rate etc.).

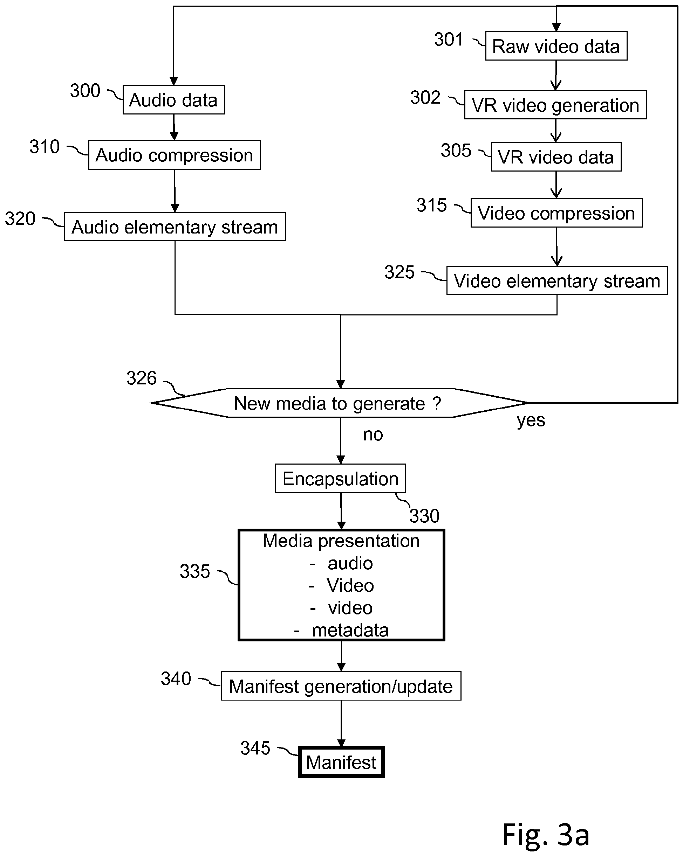

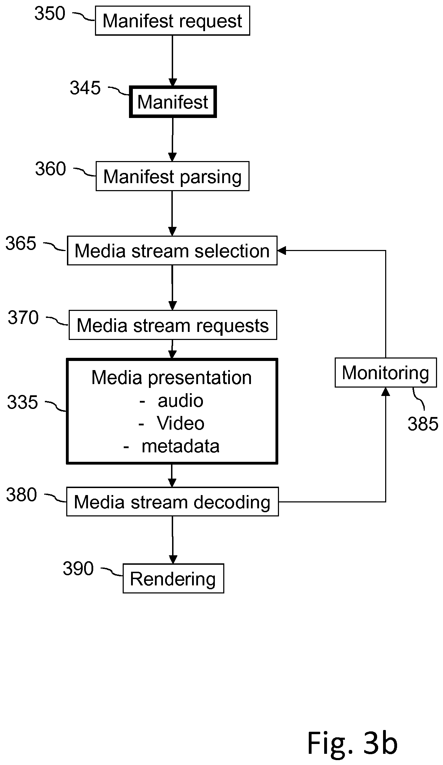

For example, the media content components of this media presentation are encapsulated according to the ISO Base Media File Format and DASH recommendations. As a result of the encapsulation step, each alternative versions (or Representation in DASH context e.g. *Representation 1* and *Representation 2*) is temporally split into small independent and consecutive temporal media segments (e.g. temporal media segments 210-1 to 210-3 and 211-1 to 211-3, respectively), for example media segments conforming the MP4 standard (ISO/IEC 14496-14), that can be addressed and downloaded independently. Each media segment may contain one or more media content components. Addresses (i.e., HTTP URL addresses in the illustrated example) are set by server 200 for all the media segments and a manifest is created as described herein below by reference to Figure 3.

A manifest, for example a MPD, is a document, typically an XML file (or even a plain text file, for HTTP Live Streaming), that describes all the media content components that can be accessed for a given media presentation. Such a description may comprise the types of the media content components (for example audio, video, audio-video, metadata, or text), the durations of the media segments, and the addresses (e.g. the URL) associated with the media segments, that is to say the addresses from which the media content components can be obtained.

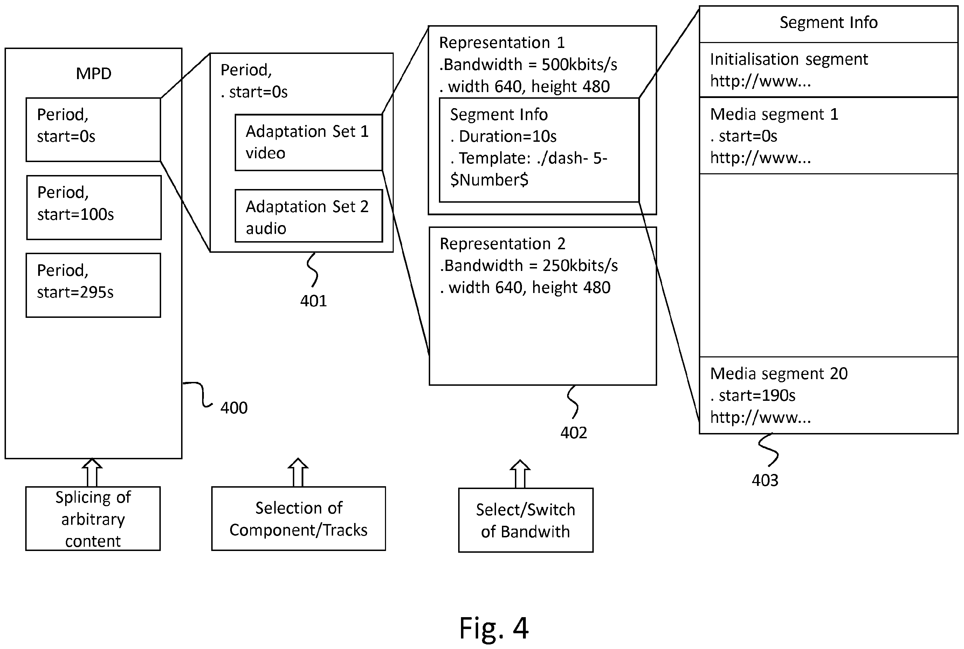

Typically, an MPD is based on a hierarchical data model as depicted in Figure 4. It consists of one or multiple periods (reference 400 in Figure 4), each period having a starting time and duration and consists of one or multiple adaptation sets (reference 401 in Figure 4). An adaptation set provides the information about one or multiple media content components and its various encoded alternatives (reference 402 in Figure 4), each encoded alternative of the same media content component being referred to as a Representation. In turn, each Representation typically consists of one or multiple media and/or initialization segments (reference 403 in Figure 4).

For the sake of illustration, audio and video streams of media presentation 205 are considered interleaved. These interleaved audio and video data streams are proposed as two alternative version, each version being split into consecutive temporal media segments, for example into three consecutive temporal media segments 210-1 to 210-3 and 211-1 to 211-3 corresponding to three consecutive periods of time. The manifest file describes the media presentation as composed of at least one adaptation set (not represented) that comprises at least two versions that contain several media segments. The addresses of these segments are set by server 200. These addresses and other items of information relative to the media content components and to media segments 210-1 to 210-3 and 211-1 to 211-3 are accessible in manifest 215 corresponding to media presentation 205.

This manifest file is sent to client 220 (step 225). After having been received, manifest file 215 is analyzed by client 220 to determine which presentations are available and which media segments 210-1 to 210-3 and 211-1 to 211-3 of media presentation 205 are accessible. Manifest file 215 is also used to determine the http addresses of these media segments and the relations between these media segments. Moreover, manifest file 215 gives items of information about the content of the media presentation (i.e. interleaved audio and video in the given example). These items of information may comprise a resolution, a bit-rate, and similar information.

In view of this information, the adaptation logic module 250 of the client 220 can therefore select media segments from appropriate versions to emit corresponding http requests (step 230) for downloading these media segments. In response, server 200 transmits the requested temporal media segments (step 235). These temporal media segments, received in http response 235, can be parsed (de-encapsulated) and then decoded in appropriate media decoder 240 (typically one decoder per media type) and displayed on display 245. In particular displaying may include a transformation process for instance to project a panorama image into a new frame reference (display frame reference).

It is noted that server 200 may consist in separate servers or devices, each performing one or more of the following steps:
- generation of the media content,
- encapsulation of the media stream in file format,
- generation of the streaming manifest or playlist file,
- transmission of the media presentation, and
- transmission of media content, most often as content segments.

The client may thus issue requests for the manifest to a first server, for example an application server and requests for the media content to one or more other servers, for example media servers or streaming servers. The server which transmits the media samples may be also different, for example if media is delivered through a CDN (Content Delivery Network).

**Figure 3a** illustrates steps for generating a media presentation and a corresponding manifest file. Such steps are typically carried out by a server such as server 200 in Figure 2.

Audio and video data denoted 300 and 305, respectively, can be obtained, for example, from an external source, via a communication network, such as a data storage server connected to the server carrying out the steps illustrated in Figure 3.

As illustrated, raw video data 301 can be stitched to generate virtual reality video (step 302). Such a step can be performed within the server or remotely, for example in the video source.

While considering a wide view of a scene, for example a 360° view in both horizontal and vertical dimensions, as illustrated with reference 180 in Figure 1b, a panorama image of the wide view corresponds to a projection (denoted a capturing projection) of this wide view captured by one image sensor or a set of image sensors onto a 2D image. Accordingly, a capturing projection scheme is associated with each panorama image, for example to conserve appropriate proportions in the recorded scene.

Audio data are compressed during step 310. Such a compression can be based, for example, on the MP3 standard (MPEG-1/2 Audio Layer 3). In parallel (or before or after), video data are compressed during step 315. To that end, video data compression algorithms such as MPEG4, MPEG/AVC, SVC, HEVC, or scalable HEVC can be used.

The audio and video data are compressed as data elementary streams, as illustrated with references 320 and 325, respectively. After the audio and video data have been processed (step 326), the compressed elementary streams are encapsulated during step 330 to create overall media presentation 335.

For example, the ISO BMFF standard (or, still for the sake of illustration, the extension of this ISO BMFF standard to AVC, SVC, HEVC or scalable HEVC) can be used for describing the content of the encoded audio and video elementary streams as an overall media presentation. Accordingly, the encapsulated media presentation is used as input for the generation (step 340) of a manifest, for example XML manifest 345.

Any encapsulation format providing descriptive metadata and timing information for the media data stream such as MPEG-2 Transport Stream, Common Media Application Format, and WebM could be also used. The encapsulation format should provide descriptive information that can be extracted by server and provided in a manifest file to help a streaming client to select the most suitable versions of the media data.

**Figure 3b** illustrates steps for selecting a media presentation from a manifest file. Such steps are typically carried out by a streaming client such as the client 220 in Figure 2. In response to an initial client's request 350, the manifest file 345 is received by the client. The manifest file is parsed at step 360 to determine which media stream should be downloaded.

Next, selection step 365 of the media stream aims at determining a list of media segments that match the characteristics of the client (for example in terms of bandwidth, codec, resolutions, VR support, etc.). This can be handled by an adaptation logic, such as the adaptation logic 250 of the client 220 illustrated in Figure 2. For example, the client selects from a MPD file a Representation which contains the list of media segments that are requested at step 370 with their HTTP URL addresses.

In response, a media presentation file is received. It includes the encapsulated media streams. The media data elementary streams are then extracted from the encapsulation format before decoding the media stream at step 380. For example, in case of ISO BMFF files, extraction of the elementary streams is typically handled by a mp4 reader or mp4 parser. Accordingly, each elementary stream is decoded with an appropriate decoder and then rendered on the VR renderer during step 390.

The rendering process includes, in particular, a rendering projection step of the decoded samples to provide an immersive experience. During the streaming session, the adaptation logic of the client monitors the transmission (step 385) and may switch to another version of the media (for example if the client buffer risks an overflow or an underflow or following a selection or action from the user through the user interface). In such a case, the algorithm is going back to step 365. When no switch is done, the next media segments in the same versions are requested in step 370.

**Figure 4** illustrates an example of the hierarchical content of a DASH manifest file. More precisely, it illustrates the content of a media presentation available at the server and the relation between each media component, also called media data, and the HTTP addresses.

For the sake of illustration, the media presentation may be temporally split into coarse-grained periods called *period* (splicing of arbitrary content).

A *"period"* at the MPD level describes all the media components that are available for a period of time (that could be the complete duration of the media presentation if there is only one period). Within this period, a media content component can be composed of several data segments corresponding to small period of time previously mentioned, to allow easy streaming, random accessing, and switching.

The MPD (e.g. a XML MPD) contains all the data corresponding to each period. Therefore, when receiving this information, a client is aware of the content of each period of time. For example, media presentation 400 is divided into several elements, each one corresponding to a *period.* Still for the sake of illustration, the second period is comprised into the moments 100s and 294s.

Each media presentation's period contains data that describes the available media content component for the corresponding period of time. One of the media presentation's period denoted 401 is illustrated in more detail.

In addition several "adaptation set" elements are incorporated: one for the video description and one for the audio description. Each adaptation set is associated with a given track. In this example, the first adaptation set is associated with the video track and the second adaptation set is associated with the audio track corresponding to the video track for the considered time period.

As illustrated, an adaptation set structure 402 contains information about the different possible Representations (i.e. versions) of the encoded video available at the server. In this example, the first Representation is a video having a spatial resolution of 640x480 that is encoded at the bit rate of 500 kbit/s. More parameters are given by the field "Segment Info" 403.

The second Representation is the same video that is encoded at a rate of 250 kbit/s. It may represent a decrease in quality compared to the first Representation for instance. The client will be able to switch between those Representations depending on the available bandwidth on the network.

Each of these Representations can be downloaded by HTTP requests if the client knows the HTTP addresses related to the video. The association between the content of each Representation and a HTTP address is done by using an additional temporal sub-layer.

As illustrated with reference 403, the video Representation 402 is split into temporal segments (of 10 seconds in this example).

Each temporal segment 403 is a content stored at the server that is accessible through an HTTP address. In addition, an initialization segment is available. This initialization segment contains MP4 initialization information (if the video has been encapsulated by using the ISO BMFF or extensions) describing the MP4 content of the encapsulated video. For example, it helps the client to instantiate the decoding algorithms related to the video. The HTTP addresses of the initialization segment and the media segments are given in the MPD (or description) file, which is illustrated more in detail below.

It is noted that the DASH standard introduces the ability to express spatial relationships among media content components in MPD either at the adaptation set level or at the sub-representation level. It consists in using either *SupplementalProperty* or *EssentialProperty* descriptors with *@schemeldURI* equal to *"urn:mpeg:dash:srd:2014".* The *@value* attribute consists of a comma separated list of values for SRD (*Spatial Relationship Description*) parameters comprising the following parameters:
- *source_id* provides the identifier of the source of the media content. The parameters (*object_x, object_y, object_width, object_height*) used in different SRD sharing the same value called "source_id value" within a Period may be compared to determine that two Representations spatially relate to each other;
- *object_x*: provides the horizontal position, in the reference space defined by this SRD descriptor, of the top-left corner of the video described in the *AdaptationSets* or *SubRepresentations* using this descriptor;
- *object_y*: provides the vertical position, in the reference space defined by this SRD descriptor, of the top-left corner of the video described in the *AdaptationSets* or *SubRepresentations* using this descriptor;
- *object_width*: provides the width, in the reference space defined by this SRD descriptor, of the video described in the *AdaptationSets* or *SubRepresentations* using this descriptor;
- *object_height*: provides the height, in the reference space defined by this SRD descriptor, of the video described in the *AdaptationSets* or *SubRepresentations* using this descriptor;
- *total_width*: provides the maximum extent along the x-axis of the video described in the *AdaptationSets* or *SubRepresentations* having SRD with the same *source_id* value. When not present, this value is set to the *total_width* value of the SRD annotation having the same *source_id* value. For a given *source_id* value, at least one *total_width* value shall be specified;
- *total_height*: provides the maximum extent along the y-axis of the video described in the *AdaptationSets* or *SubRepresentations* having SRD with the same *source_id* value. When not present, this value is set to the *total_height* value of the SRD annotation having the same *source_id* value. For a given *source_id* value, at least one *total_height* value shall be specified;
- *spatial_set_id*: provides an identifier for a group of *AdaptationSets* or *SubRepresentations* that have the same *source_id* value. The *spatial_set_id* parameter can be used to indicate that a group of *AdaptationSets* or *SubRepresentations* form a group of non-overlapping or contiguous videos without gaps or are part of a same scalability layer;

The *object_x* and *object_y* parameters (respectively *object_width* and *object_height*) express 2D positions (respectively 2D sizes) of the associated *AdaptationSets* or *SubRepresentations* in the coordinate system associated with the source, identified by the *source_id* parameter. This coordinate system may use an arbitrary origin. According to particular embodiments, the x-axis is oriented from left to right and the y axis from top to bottom. All SRD sharing the same *source_*id value have the same origin and axes orientations.

The *total_width*and *total_height* values define a reference space in this coordinate system. The values of the *object_x, object_y, object_width,* and *object_height* parameters are relative to the values of the *total_width* and *total_height* parameters. Positions (*object_x, object_y*) and sizes (*object_width, object_height*) of SRD sharing the same *source_id* value may be compared after taking into account the size of the reference space, i.e. after the *object_x* and *object_width* values are divided by the *total_width* value and the *object_y* and *object_height* values divided by the *total_height* value of their respective descriptors.

As described above, a virtual reality video server has to cope with a great variety of clients which may have different processing capabilities and different display configurations, for example from a narrow angle display (typically 40-120° FOV for goggles) up to a very wide angle (up to 360° FOV for a multi-projector display and//or wall screens). Accordingly, in an adaptive streaming context, the video server has to generate numerous encoded versions of video sequence to ensure that each specific client is able to find an appropriate media stream which meets its processing constraints (so as to avoid consuming bandwidth, during transmission, for samples which cannot be correctly rendered by a client).

According to embodiments of the invention, the video server generates new combinations of virtual reality media data are that specific to the use of VR content. These new combinations add selection alternatives for VR clients, which makes it possible to select an optimal VR stream as a function of the needs of the VR client. In particular, the video server may generate video sequences with different field of views (FOV). The server may also use different encoding qualities in specific areas of the panorama images so that the client can select the best quality given a viewpoint.

The difference of quality may be due to either one or both of the following items:
- different encoding qualities (QP) for specific areas; and
- different panorama projections which may lead to higher pixel resolutions in a specific viewpoint;

For example, the video server may use a pyramidal projection. In this projection model, the pyramid base face has a higher pixel resolution than its other 4 faces. As a result, the quality of the samples projected from one viewpoint of the 3D wide view represented as a sphere on the pyramid base have a better quality than the samples projected according to the opposite direction. The video server thus computes several streams (for instance 30) using different projection directions (for instance with a regular sampling of the sphere representing the 3D wide view, in every orientations).

The set of streams obtained at the end of the encoding processing loop (e.g. steps 300 to 326 described by reference to Figure 3) are then encapsulated in different media streams using a file format (typically ISO BMFF). It is noted that the set of streams may be encapsulated in the same media stream by using different encapsulation tracks for each stream. This applies in particular for scalable video streams for which each encoded layer may be encapsulated in different tracks of a single media stream.

According to a first embodiment illustrated in table 1 of the Appendix, the video server generates a manifest file (for instance an MPD for the DASH context) which includes information specifying the field of view of at least one segment of one media stream. This information corresponds to the maximum field of view that can be viewed with the concerned segment, in the 3D frame reference of the sphere representing the 3D wide view, for example the 3D frame reference 135 in Figure 1b.

According to a first alternative, the FOV is parameterized by a single value which corresponds either to the horizontal angle, the vertical angle, or diagonal angle such as the horizontal and vertical angles 125 and 130 illustrated in Figure 1c, respectively. This FOV value may vary from 0 to 360 and corresponds to the angle measured in degrees.

In the MPD file, this new parameter may be defined in a dedicated descriptor at several levels of the MPD.

In particular, this new descriptor may be defined as an XML node (attribute or element) in the description of the segments: @HFOV for horizontal FOV angle, @VFOV for vertical FOV angle, or @DFOV for diagonal FOV. It may also be defined in an attribute or element at the adaptation set, representation, or sub-representation level. The names are provided here for example, any reserved name can be used and declared in the XML schema of the MPD as a new attribute of the *RepresentationBaseType* element, *AdaptationSetType, RepresentationType,* or *SubRepresentation Type.*

This new descriptor may be defined in a dedicated descriptor, for example in a descriptor dedicated to VR content (for example signaled with a specific URN like *"urn:mpeg:dash:VR:2016"* in its *schemeIdUri* attribute) which can be defined at the sub-representation level, the representation level, or the adaptation set level. It may be defined as a *SupplementalProperty* descriptor when the parent *AdapatationSet, Representation,* or *SubRepresentation* could be handled by a client that does not support the VR's *schemeldUri* attribute and as an *EssentialProperty* descriptor when the parent *AdapatationSet, Representation,* or *SubRepresentation* should be discarded by clients that do not support the VR's *schemeldUri* attribute.

Then, the FOV to be used (that is parameterized by two angle values) is computed using the angle value provided by the MPD and the size or the aspect ratio of the corresponding media sample. For the sake of illustration, if the FOV information provided by the MPD is the horizontal FOV angle, the vertical FOV angle is computed by dividing this FOV information value by the aspect ratio. Therefore, as an example, if the MPD indicate an HFOV value that is equal to 180 (degrees, by default) and the aspect ratio is 16/9, the vertical value is equal to 180*9/16=101°.

According to a second alternative, the FOV is specified in the manifest file by at least two angle values using the same descriptor. There is no need for computing a second FOV and the processing time of the manifest at the client end is slightly improved.

It is noted that an advantage of defining the FOV parameters in the manifest file is that a client just needs to parse the manifest file to identify the appropriate version to select as a function of its FOV parameters. Without this additional information in the manifest, the client must download the initialization segment of all the versions to parse the information in the file format regarding the FOV of the stream.

Therefore, the client parses the manifest file and extracts the information of FOV for each media stream alternative. The client selects the media streams which have the closest FOV to its FOV. When the FOV is narrower than the display's FOV the decoded image is stretched before the rendering to ensure a correct viewing of the VR content.

In an alternative, the client discards, in a preliminary step, the media streams for which the FOV value is narrower than its FOV.

Then, the media stream which FOV is the closest to the client's display FOV is selected. It ensures that only media stream with a sufficient FOV is selected.

According to another embodiment, the video server specifies other information in the manifest for specifying the targeted display's configuration associated with a media segment. For example in MPD, this can be done at the adaptation set level, at the representation level, or even at sub-representation level.

For example, such information may be directed to the targeted FOV of the display. Accordingly, a stream may be encoded for targeting a HMD with a 90° horizontal FOV while another stream may be encoded for targeting a 210° horizontal FOV. It is observed that the targeted (or preferred) FOV is different than the previously described FOV information since the targeted (or preferred) FOV may be narrower than FOV of the media stream. In particular, some capturing projections provide more pixel resolution on specific part of the panorama. For instance, the pyramidal projection generates higher quality on its base. The corresponding FOV of the pyramid base is one parameter of the projection and thus may be different from one VR stream to another. For example, a resulting stream may provide a 360° FOV and a preferred (or targeted) FOV of 120° which corresponds to the size of the pyramid base in the 3D frame reference (e.g. the 3D frame reference 135 in Figure 1b).

The pseudo-manifest of table 2 of the Appendix is an example of a manifest which indicates in a dedicated descriptor the preferred (or targeted) FOV value (here 180, assumed in degrees unit) at the adaptation set level. It is noted that the information conveyed by the new attributes for the *SupplementalProperty* generic DASH descriptor can be placed in the value attribute of this DASH generic descriptor.

As a result, all the representations belonging to this adaptation set are suitable for being displayed with a FOV of 180°. The syntax of the preferred (or targeted) FOV parameters may be defined similarly to the FOV parameter of the previous embodiment. In particular, it may be specified either through a single parameter having multiple values respectively corresponding to either the horizontal or the vertical, or the diagonal preferred FOV value or by two values from the three possible FOV angles. When using a single FOV angle value, HFOV is used by default. When two values are used, HFOV and VFOV are used by default. In an alternative, the preferred FOV descriptor includes information specifying which angles are used and also their value to define the FOV.

At the client end, upon reception of the manifest and after having parsed the latter, the preferred FOV parameter may be obtained. As a consequence, the client may select the version with a preferred (or targeted) FOV that is greater than or equal to and also the closest to its predefined display's FOV. As a result, the client is able to request the media segments which will provide the best rendering quality on its rendering device.

A second parameter that may be specified in the manifest is the optimal viewpoint (i.e. the viewing direction that should be used to view one version). This parameter describes a set of values that specify a viewing direction in the frame reference of the wide view representation (e.g. the frame reference 135 in Figure 1b).

Table 3 of the Appendix is an example of pseudo manifest illustrating how to provide an optimal viewpoint to client by adding such a parameter in a *SupplementalProperty* descriptor at the version level. According to this example, this parameter is defined by 4 values *optimalViewpoint*="*refID, yaw, pitch, roll"* wherein,
- *refID* is the identifier of the frame reference which purpose is to select a common frame reference;
- yaw is the Yaw angle value in the frame reference associated with the frame reference identifier value;
- pitch is the Pitch angle value in the frame reference associated with the frame reference identifier value; and
- roll is the Roll angle value in the frame reference associated with the frame reference identifier value.

Typically, for HMD systems, the Yaw angle corresponds to a rotation from left-to-right or right-to-left of the head, the Pitch angle corresponds to a rotation from top to bottom or bottom to top and the Roll angle corresponds to a rotation (inclination) of the head around the viewing direction axis.

The identifier of the frame reference is preferably a unique identifier value that is the same for the version for which the optimal viewing direction coordinates are defined in the same frame reference. The origin of the frame reference should be the default or initial version selected by the client (through a *Role* descriptor with "main" value for instance in DASH context, or through a dedicated DASH descriptor with a specific name and *schemeIdUri* defined to provide a default viewpoint information) and the Yaw, Pitch, Roll should be equal to 0 for this representation.

According to an alternative, only Yaw value is defined and the two remaining values (Pitch and Roll) are optional (and set to 0 by default). For example, *value="0, 180,* 0" means that the value of the yaw angle is 0, the value of the pitch angle is 180°, and the value of the roll angle is 0. Another example is value="120". In this case, only the yaw value is specified (equal to 120) and the pitch and roll are inferred to be equal to the default value 0. By default, angle values are expressed in degrees, in case other units are preferred, it requires an additional attribute to provide the *angle_unit,* (for example *angle_unit=*"*radian"*) or a fourth optional parameter in the FOV descriptor.

According to an alternative, Yaw, Pitch and Roll are all optional (and set to 0 by default). In such a case, the descriptor explicitly specified which angle is defined. For instance, the value attribute previously described is a list of two components parameters. The first component is a string specifying the type of the angle for example equal to "yaw", "pitch" or "roll" or predefined integer value which is associated to each angle type. The second component is the corresponding value of the angle specified in by the first component value.

Again, at the client end, upon reception of the manifest and after having parsed the latter, the optimal viewpoint parameter may be obtained. As a consequence, the client may select the version with the optimal viewpoint that is the closest to the viewpoint conditions. For example, if the current viewing direction (viewpoint) of the user is determined during the media stream selection process (e.g. step 365 in Figure 3b), this observation viewpoint is used as the reference value that will be compared to the optimal viewpoint information of each version. The version (i.e. *AdaptationSet, Representation,* or *SubRepresentation* in DASH context) which minimizes the difference with observation viewpoint is selected. As a result, the client is able to request the media segments which should provide the best quality for the current client's viewing conditions.

It is observed that in the examples illustrated in tables 2 and 3 of the Appendix, the preferred FOV and/or the optimal viewpoint are specified in a *SupplementalProperty* descriptor in order to allow a manifest parser to ignore the descriptor if not supported. Indeed, the representations are still playable even if any of the optimal viewpoint or preferred FOV is ignored.

According to an alternative, the video server specifies these parameters in an *EssentialProperty* descriptor except for one specific representation or adaptation set so as to force non VR clients to ignore alternative representations that may not be useful and select a default representation (the one with the *SupplementallProperty* descriptor). The parameters are preferably provided at the RepresentationBaseType level so that these parameters may be used either at the adaptation set level, at the representation level, or at the sub-representation level.

According to another alternative, the preferred FOV and/or optimal viewpoint are specified within one dedicated XML node (with its name declared in the MPD schema) at the adaptation set level (or at the representation or sub-representation level) to further simplify the parsing of the information related to the VR content. The VR information parameters can be then specified either as child element or as attribute of any of the XML element of the MPD. In such a case, the VR information applies not only to the media stream, if any, described by the XML element in which it is specified but also to all its children.

Still according to another embodiment, the video server may generate a manifest file that helps a client to select an appropriate version as a function of different levels of quality associated with sub parts of the panorama images. For example, the video server may encode several media data streams for one panorama video sequence using a cubical projection. Each face of the cubical projection may be encoded with different quality levels. Accordingly, the video server generates six different streams so that one panorama region (different for each stream) is in high quality while the others are in medium or low quality, within each stream. Similar stream configurations may be used for other types of panorama projection.

In such a case, a client is not able to determine a version to select as a function of the user viewing direction (or viewpoint). Therefore, the video server preferably adds new information in the manifest file for providing hints which help the client to select an appropriate version as a function of the user viewpoint.

According to this embodiment, the server defines a set of quality regions in the panorama stream that preferably correspond to panorama regions. The locations of the quality regions may be predetermined or specified in a new information field of the manifest which is a description of a quality region. Such a *qualityRegion* parameter contains x-axis and y-axis coordinates to localize the region in each panorama image and the size (width and height) of the panorama region. These four values form a first set of values of the *qualityRegion* parameter which identify a panorama region.

In addition to the location of a panorama region, an optional parameter may be used to specify more information concerning the panorama region. For the sake of illustration, it may specify an identifier which indicates the face of the cubical projection to which the panorama region is corresponding. The identifier may be a predefined integer value corresponding to the front, rear, top, bottom, left, or right face. It may be, for example, one of the surface identifier values proposed in OMAF. The identifier may be defined also as a string element which is directly the name of the face in the previous list. Similar approach can be used for other projection type.

Another field may be associated with the first set of values to provide a quality rank associated with the region. Such a quality rank may be an integer value that indicates the highest quality when it is equal to zero. The quality decreases when the quality rank increases. Alternatively, the quality rank may be selected within a set of predetermined values such as *"high, low, medium, highest, and lowest".*

Table 4a of the Appendix illustrates an example of quality regions descriptor with the following syntax *qualityRegion="qRegId, x,y, w,h"*where:
- *qRegId* is a unique identifier of the quality region,
- (*x, y*) are the coordinates of the quality region, and
- (*w, h*) are respectively the width and height of the quality region.

In this example, the *qualityRegion* are expressed as new elements of the DASH generic descriptor. They can also be expressed as a list in one new attribute and in the case of DASH by any XML structure providing these five parameters inside the selected descriptor (either the DASH generic one or an explicit one).

The *qualityRegion* coordinates are defined in the panorama video sequence frame reference. The *qualityRegion* are defined in a descriptor common to all the different versions of panorama video sequence. Typically, as illustrated in the example of table 4a, the MPD file includes an *AdaptationSet* with several Representations for each Panorama version. The *QualityRegion* descriptor is thus defined at the *AdaptationSet* level. When the different versions of panorama video sequence have a different size, the *qualityRegion* coordinates are defined in the *AdaptativeSet* referential using its width and height attribute. The corresponding location of the *qualityRegion* in the Panorama is determined by applying the ratio of the *AdaptationSet's* width (resp. height) and the panorama video sequence's width (resp. height). The quality rank information is specified at each panorama version level with the *qualityRegionDescriptor* which first parameter is the unique identifier *qRegld* of a region described in a *qualityRegion* descriptor. The second parameter of *qualityRegionDescriptor* is the value of the *qualityRank.*

In an alternative, the location of the panorama region is specified according to a spatial relationship descriptor. For example, in DASH context, the SRD descriptor is used for each media stream corresponding to each quality region. In this case, the SRD descriptor contains a *spatial_set_id* whose value corresponds to a unique identifier of the corresponding quality region. Table 4b illustrates a manifest file with information specifying the *qualityRegion* information using SRD descriptors. Two panorama versions of a sequence are described within two Representations in a first *AdaptationSet.* In addition, a SRD descriptor is used in this first *AdaptationSet* to indicate that the panorama video sequences are further divided in quality region. Each of (for example two) quality regions are then described in different *AdaptationSet* (for example in a second and third *AdaptationSet*)*.* The *spatial_set_id* value used in the SRD descriptor of the *AdaptationSet* which corresponds the quality region is used as *qRegld* quality region's unique identifier. The same *qualityRegionDescriptor* as in previous embodiment is then used in each Representation corresponding to one panorama video sequence version.

According to another embodiment, a quality region is defined in the frame reference of the wide view version (e.g. the frame reference 135 in Figure 1b). In such a case, the first set of values that make it possible to localize a quality region is determined in a frame reference associated with a viewpoint and a FOV (as described by reference to Figure 1c).

As described above by reference to a preferred viewpoint, the viewpoint of a quality region can be defined as a set of three vector components corresponding to the yaw, pitch, and roll values. In an alternative at least one of the three components is provided and the others are inferred as equal to 0.

Similarly, the FOV of the quality region may be represented by a single FOV value typically the horizontal FOV angle or by two FOV values, for example a horizontal FOV angle and a vertical FOV angle.

An advantage provided by the last embodiment lies in the fact that a quality region may be defined independently from a panorama projection.

Table 4c of the Appendix illustrates an example of a pseudo-manifest that is directed to two representations which correspond to two versions of a panorama sequence. According to the first representation, the quality region in the (0,0,0) viewpoint direction for a horizontal FOV of 120° and a vertical FOV of 90° is encoded using a high quality level ("r0"). The remaining region of the panorama images is encoded using a lower quality level. According to the second representation, the quality region in the (180,0,0) viewpoint direction for a horizontal FOV of 120° and a vertical FOV of 90° is encoded using a high quality, the remaining region of the panorama images being still encoded using a lower quality level.

According to particular embodiment, the server 200 generates a MPD file which includes a *qualityRegionDescription* parameter in a dedicated *SupplementalProperty* descriptor at the adaptation set, representation or sub-representation level.

The syntax of this parameter may be the following:
*qualityRegionDescription="pitch,yaw,roll,h_fov,v_fov,qualityRank [*, *regionId]"* where
- *pitch, yaw,* and *roll* are the viewpoint direction in the frame reference;
- *h_fov* and *v_fov* are respectively the horizontal and vertical FOV angles;
- *qualityRank* is the quality rank; and
- the optional *regionId* value indicates (when applicable) the panorama region to which the quality region corresponds.

When receiving such a manifest, a client determines its viewing direction and current FOV so as to compare them with the corresponding values described in each quality region description. It may select the representation that provides the highest quality rank for the quality region which includes the area of the panorama image which is currently displayed.

In order to simplify the parsing of a manifest for example the MPD at the client end, the video server may generate a list of quality regions which are specified in the MPD. The list of quality regions can be defined at any level of the MPD (top level, period, adaptation set, representation, or sub-representation) with the constraint that the list is valid for any sublevel of the region list's level. Preferably the list of quality regions is defined at the period level.

As described above in reference to previous embodiments, the quality regions of the list of quality regions may be determined from a viewpoint and a FOV in the frame reference of the wide view representation (e.g. the frame reference 135 in Figure 1b). For example, one *qualityRegion* parameter may be defined with the values *qualityRegion="qRegId, pitch,yaw,roll,h_fov,v_fov"* were *qRegId* is a unique identifier of the quality region, (p*itch, yaw, roll*) represents the viewpoint values, and (*h_fov, v_fov*) represents the horizontal and vertical FOV angles.

The list of quality regions is a list of several quality regions which corresponds to a sampling of the wide view in quality regions.

As illustrated in table 5 of the Appendix, the pseudo-manifest file defines a list of *n* quality regions (where *n* is an integer value greater than 4) in a dedicated descriptor wherein the VR *schemeldUri* attribute is defined at the period level.

Each representation references the quality region identifier to specify the *qualityRank* attribute associated with each region in the *qualityRegionDescription* attribute which comprises a quality region identifier followed by a quality rank value.

In order to avoid specifying a qualityRank value for each of the *n* quality regions, a special quality region identifier (typically equal to *"default"* string or to -1) indicates a default *qualityRank* value for unspecified regions.

In the example illustrated in table 5, the first representation includes two quality region description parameters which indicate that the default *qualityRank* value of the quality regions is 5 while the *qualityRegion* corresponding to the quality region identifier zero has the quality rank 0.

At the client end, upon reception of the manifest, the latter is parsed to determine the identifier of the quality region which is to be displayed by the user. The client then selects the representation which has the lowest *qualityRank* value for the so determined quality region identifier. Therefore, in this last embodiment, the parsing process on the client side is reduced.

It is noted that in the embodiments described previously, the VR related parameters can be defined at any level of the MPD. In particular, any combination of the new parameters is possible depending on the streaming context between the server and the client. In addition, the VR related parameters should be defined in a dedicated descriptor typically a *SupplementalProperty* descriptor (or an *EssentialProperty* descriptor) with a *SchemeIdUri* attribute that is equal to *"urn:mpeg:dash:VR:2016".* The VR related parameters may be defined as new XML nodes (elements or attributes). In an alternative, these parameters are introduced directly as a new element (or attribute) of any *RepresentationBaseType* compatible XML elements. In such a case, the VR related parameters are valid for the topmost XML element which contains the VR related parameters and its child's.

According to particular embodiments, the server provides backward compatibility with clients which do not support the new VR descriptors by selecting a default representation for the VR content which is playable. The selected representation may correspond for instance to a panorama view or to a default panorama region of the panorama view which is displayable without too much distortion even if the projection process is not applied at the display end.

To that end, the server may use a *SupplementalProperty* descriptor type for the new VR descriptor associated with this selected representation and the *EssentialProperty* descriptor type for the other representations. This ensures that a client which does not support the new VR descriptor is still capable of decoding one view in the manifest file. In another alternative, the selected representation is defined as the default view through a *Role* descriptor with for example "main" value.

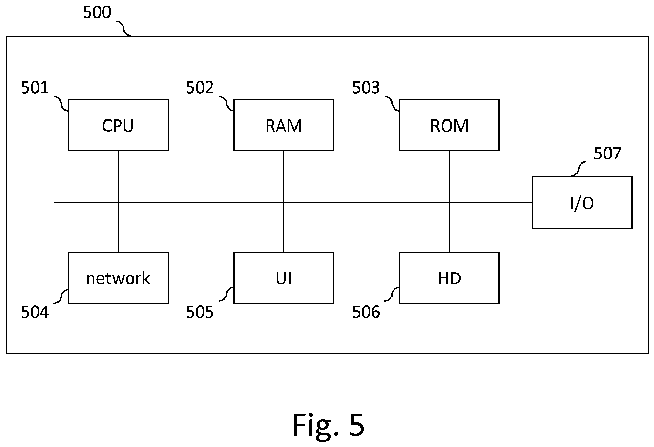

**Figure 5** is a schematic block diagram of a computing device 500 for implementation of one or more embodiments of the invention. The computing device 500 may be a device such as a micro-computer, a workstation or a light portable device. The computing device 500 comprises a communication bus connected to:
- a central processing unit (CPU) 501, such as a microprocessor;
- a random access memory (RAM) 502 for storing the executable code of the method of embodiments of the invention as well as the registers adapted to record variables and parameters necessary for implementing the method for reading and writing the manifests and/or for encoding the video and/or for reading or generating data under a given file format, the memory capacity thereof can be expanded by an optional RAM connected to an expansion port for example;
- a read only memory (ROM) 503 for storing computer programs for implementing embodiments of the invention;
- a network interface 504 that is, in turn, typically connected to a communication network over which digital data to be processed are transmitted or received. The network interface 504 can be a single network interface, or composed of a set of different network interfaces (for instance wired and wireless interfaces, or different kinds of wired or wireless interfaces). Data are written to the network interface for transmission or are read from the network interface for reception under the control of the software application running in the CPU 501;

- a user interface (UI) 505 for receiving inputs from a user or to display information to a user;
- a hard disk (HD) 506;
- an I/O module 507 for receiving/sending data from/to external devices such as a video source or display.

The executable code may be stored either in read only memory 503, on the hard disk 506 or on a removable digital medium such as for example a disk. According to a variant, the executable code of the programs can be received by means of a communication network, via the network interface 504, in order to be stored in one of the storage means of the communication device 500, such as the hard disk 506, before being executed.

The central processing unit 501 is adapted to control and direct the execution of the instructions or portions of software code of the program or programs according to embodiments of the invention, which instructions are stored in one of the aforementioned storage means. After powering on, the CPU 501 is capable of executing instructions from main RAM memory 502 relating to a software application after those instructions have been loaded from the program ROM 503 or the hard-disc (HD) 506 for example. Such a software application, when executed by the CPU 501, causes the steps of the flowcharts shown in the previous figures to be performed.

In this embodiment, the apparatus is a programmable apparatus which uses software to implement the invention. However, alternatively, the present invention may be implemented in hardware (for example, in the form of an Application Specific Integrated Circuit or ASIC).

Although the present invention has been described hereinabove with reference to specific embodiments, the present invention is not limited to the specific embodiments, and modifications will be apparent to a person skilled in the art which lie within the scope of the present invention.

For example, the present invention may be embedded in a device like a camera, a smartphone, a head-mounted display, or a tablet that acts as a remote controller for a TV or for multimedia display, for example to zoom in onto a particular region of interest. It can also be used from the same devices to have personalized browsing experience of a multimedia presentation by selecting specific areas of interest. Another usage from these devices and methods by a user is to share with other connected devices some selected sub-parts of his preferred videos. It can also be used with a smartphone or tablet to monitor what happens in a specific area of a building put under surveillance provided that the surveillance camera supports the method for providing data according to the invention.

Many further modifications and variations will suggest themselves to those versed in the art upon making reference to the foregoing illustrative embodiments, which are given by way of example only and which are not intended to limit the scope of the invention, that scope being determined solely by the appended claims. In particular, the different features from different embodiments may be interchanged, where appropriate.

### APPENDIX

**Table 1: Pseudo manifest with information specifying the field of view**

| |
|---|
| <MPD> |
| <Period ...> |
| <!-- Panorama view (Pyramid Projection)--> |
| <AdaptationSet ...> |
| **<SupplementalProperty schemeldUri ="urn:mpeg:dash:VR:2016"** |
| **HFOV="180"/>** |
| <SegmentTemplate media="seg_$Number$.m4s" startNumber="1 " |
| initialization="seg_init.mp4"/> |
| <Representation id="1" ...>... </Representation> |
| <Representation id="2" ...>... </Representation> |
| </AdaptationSet> |
| <!-- Panorama view (Pyramid Projection)--> |
| <AdaptationSet ...> |
| **<SupplementalProperty schemeldUri ="urn:mpeg:dash:VR:2016"** |
| **HFOV="360"/>** |
| <SegmentTemplate media="seg2_$Number$.m4s" startNumber="1" |
| initialization="seg2_init.mp4" .../> |
| <Representation Id="3' ...>... </Representation> |
| </AdaptationSet> |
| </MPD> |

**Table 2: Pseudo manifest with information specifying the preferred field of view**

| |
|---|
| <MPD> |
| <Period ...> |
| <!-- Panorama view (Pyramid Projection)--> |
| <AdaptationSet ...> |
| **<SupplementalProperty schemeldUri ="urn:mpeg:dash:VR:2016"** |
| **preferredFOV="180"/>** |
| <SegmentTemplate media="seg_$RepresentationId$_$Number$.m4s" |
| startNumber="1" initialization="seg_$RepresentationId$_init.mp4"/> |
| <Representation id="1" ...>... </Representation> |
| <Representation id="2" ...> ... </Representation> |
| </AdaptationSet> |
| </MPD> |

**Table 3: Pseudo manifest with information specifying the optimal viewpoint**

| |
|---|
| <MPD> |
| <Period ...> |
| <!-- First Panorama view (Pyramid Projection)--> |
| <AdaptationSet ...> |
| **<SupplementalProperty schemeldUri ="urn:mpeg:dash:VR:2016"** |
| **optimalViewpoint**=**"0,0,0,0"/>** |
| <SegmentTemplate media="seg_$Number$.m4s" startNumber="1" initialization |
| ="seg_init.mp4"/> |
| <Representation id="1" ...>... </Representation> |
| <Representation id="2" ...> ... </Representation> |
| <!-- Second Panorama view (Pyramid Projection)--> |
| <AdaptationSet ...> |
| <SupplementalProperty schemeIdUri ="urn:mpeg:dash:VR:2016" |
| optimalViewpoint="0,180,0,0"/> |
| <SegmentTemplate media="seg2_$Number$.m4s" startNumber="1" initialization |
| ="seg2_init.mp4"/> |
| <Representation id="3" ...>... </Representation> |
| <Representation id="4" ...> ... </Representation> |
| </AdaptationSet> |
| </MPD> |

**Table 4a: Pseudo manifest with information specifying a quality region associated with a quality rank value based on SRD descriptor.**

| |
|---|
| <...> |
| <AdaptationSet width=1920 height=1080> |
| **<SupplementalProperty schemeIdUri="urn:mpeg:dash:VR:2016"** |
| **<qualityRegion qRegld="1" x="0" y="0" w="1920" h="540" />** |
| **<qualityRegion qRegld="2" x="0" y="540" w="1920" h="540" />** |
| **</SupplementalProperty>** |
| <!-- First Panorama version --> |
| ... |
| <Representation ...> |
| **<SupplementalProperty schemeIdUri="urn:mpeg:dash:VR:2016" panorama="0,** |
| **Pyramidal, 2" >** |
| **<qualityRegionDescription qRegld="1" quality="0" />** |
| **<qualityRegionDescription qRegld="2" quality= "5" />** |
| **</SupplementalProperty>** |
| </Representation> |
| <!-- Second Panorama version --> |
| <Representation ...> |
| **<SupplementalProperty schemeldUri="urn:mpeg:dash:VR:2016" panorama="0,** |
| **Pyramidal, 2" >** |
| **<qualityRegionDescription qRegld="1" quality ="5" />** |
| **<qualityRegionDescription qRegld="2" quality="0"/>** |
| **</SupplementalProperty>** |
| </Representation> |
| <AdaptationSet> |

**Table 4b: Pseudo manifest with information specifying a quality region associated with a quality rank value based on SRD descriptor.**

| |
|---|
| <...> |
| <!-- First Panorama version --> |
| <AdaptationSet ...> |
| **<SupplementalProperty schemeIdUri="urn:mpeg:dash:srd:2014"** |
| **value="1, 0, 0, 0, 0, 1920, 1080"/>** |
| <Representation ...> |
| **<SupplementalProperty schemeIdUri="urn:mpeg:dash:VR:2016" panorama="0,** |
| **Pyramidal, 2" >** |
| **<qualityRegionDescription qRegld="1" quality="0"** /> |
| **<qualityRegionDescription qRegld="2" quality ="5"/>** |
| **</SupplementalProperty>** |
| ... |
| </Representation> |
| <!-- Second Panorama version --> |
| ... |
| <Representation ...> |
| **<SupplementalProperty schemeIdUri="urn:mpeg:dash:VR:2016" panorama="0,** |
| **Pyramidal, 2" >** |
| **<qualityRegionDescription qRegld="1" quality="5" />** |
| **<qualityRegionDescription qRegId ="2" quality ="0"/>** |
| **</SupplementalProperty>** |
| ... |
| </Representation> |
| </AdaptationSet> |
| ... |
| <!-- First quality region--> |
| <AdaptationSet...> |
| ... |
| **<EssentialPropertyschemeIdUri="urn:mpeg:dash:srd:2014"** |
| **value="1, 0, 0, 1920, 540, 1920, 1080, 1"/>** |
| ... |
| </AdaptationSet> |
| <!-- Second quality region2--> |
| <AdaptationSet> |
| ... |
| **< EssentialProperty schemeIdUri="urn:mpeg :dash :srd :2014"** |
| **value="1, 0, 540, 1920, 540, 1920, 1080, 2"/>** |
| ... |
| </AdaptationSet> |
| <...> |

**Table 4c: Pseudo manifest with information specifying a quality region associated with a quality rank value**

| |
|---|
| <!-- First Panorama view 1--> |
| ... |
| <Representation ...> |
| **<SupplementalProperty schemeldUri="urn:mpeg:dash:VR:2016" panorama="0,** |
| **Pyramidal, 2" qualityRegionDescription="0, 0, 0, 120, 90, r0, front"/>** |
| </Representation> |
| <!-- Second Panorama view 2--> |
| <Representation> |
| **<SupplementalProperty schemeldUri="urn :mpeg :dash :VR :2016"** |
| **panorama="0,Pyramidal,2" qualityRegionDescription="180,0,0,120,90,r0,front"/>** |
| </Representation> |
| <...> |

**Table 5: Pseudo manifest with information specifying a quality region associated with a quality rank value**

| |
|---|
| <...> |
| <!-- Quality Region descriptions --> |
| **<SupplementalProperty schemeIdUri="urn :mpeg :dash :VR:2016">** |
| **<qualityRegion value="0, 0, 0, 0, 120, 90"/>** |
| **<qualityRegion value="1, 10, 0, 0, 120, 90"/>** |
| **<qualityRegion value="2, 20, 0, 0, 120, 90"/>** |
| **<qualityRegion value="3, 30, 0, 0, 120, 90"/>** |
| **<...>** |
| **<qualityRegion value="n,320, 0, 0, 120,9 0"/>** |
| **</SupplementalProperty>** |
| <...> |
| <!-- First Panorama view 1--> |
| <Representation> |
| **<SupplementalProperty schemeldUri="urn:mpeg:dash:VR:2016" panorama="0,** |
| **Pyramidal, 2" >** |
| **<qualityRegionDescription qRegld="default" quality="5" />** |
| **<qualityRegionDescription qRegld="0" quality="0"/>** |
| **</SupplementalProperty>** |
| </Representation> |
| <...> |
| <!-- Second Panorama view 2--> |
| <Representation> |
| **<SupplementalProperty schemeldUri="urn:mpeg:dash:VR:2016" panorama="0,** |
| **Pyramidal, 2" >** |
| **<qualityRegionDescription qRegld="default" quality="5" />** |
| **<qualityRegionDescription qRegld ="1" quality="0"/>** |
| **</SupplementalProperty>** |
| **...** |
| </Representation> |
| <...> |

## Claims

1. A method for receiving media data complying with an omnidirectional media format, the method comprising:
receiving, from a server, a media presentation description according to the MPEG-DASH standard and further including
(i) at least two uniform resource identifiers each identifying a media data representation describing several regions, each of the media data representations comprising:
(ii) media information describing each of the several regions, and
(iii) a quality rank information of each of the several regions,
selecting one media data representation as a function of at least one quality rank information of one or more of the several regions;
sending, to the server, at least one request message to request media data corresponding to the selected media data representation by using the one uniform resource identifier identifying the selected media data representation; and
receiving, from the server, the media data corresponding to the selected media data representation according to the at least one request message.

2. The method according to claim 1, wherein the quality rank information is present at an adaptation set level or a representation level.

3. The method according to claim 1, wherein the media presentation description further includes field of view information.

4. A method for providing media data complying with an omnidirectional media format, the method comprising:
transmitting, to a client, a media presentation description according to the MPEG-DASH standard and further including
(i) at least two uniform resource identifiers each identifying a media data representation describing several regions, each of the media data representations comprising,
(ii) media information describing each of the several regions, and
(iii) a quality rank information of each of the several regions,
receiving, from the client, at least one request message to request media data corresponding to one media data representation selected by the user as a function of at least one quality rank of one or more regions and by using the uniform resource identifier identifying the selected media data representation; and
providing, to the client, the media data corresponding to the selected media data representation according to the at least one request message.

5. The method according to claim 1 or claim 4, wherein the quality rank information is described in a SupplementalProperty element with a specific @shemeIdUri.

6. The method according to claim 1 or claim 4, wherein the region is a 2D region.

7. The method according to claim 1 or claim 4, wherein the region represents a geometric projection of the media data on a 3D geometric display.

8. The method according to claim 7, wherein the region represents a geometric projection of the media data onto at least a portion of a sphere.

9. The method according to claim 8, wherein the portion of the sphere is **characterized by** pitch, yaw, and roll values, an horizontal field of view angle, and a vertical field of view angle.

10. A client device for receiving media data complying with an omnidirectional media format, the client device comprising:
a hardware processor; and
a memory storing one or more programs configured to be executed by the hardware processor, the one or more programs including instructions for:
receiving, from a server, a media presentation description according to the MPEG-DASH standard and further including
(i) at least two uniform resource identifiers each identifying a media data representation describing several regions, each of the media data representations comprising,
(ii) media information describing each of the several regions, and
(iii) a quality rank information of each of the several regions,
selecting one media data representation as a function of at least one quality rank information of one or more of the several regions;
sending, to the server, at least one request message to request media data corresponding to the selected media data representation by using the one uniform resource identifier identifying the selected media data representation; and
receiving, from the server, the media data corresponding to the selected media data representation according to the at least one request message.

11. A server device for providing media data complying with an omnidirectional media format, the server device comprising:
a hardware processor; and
a memory storing one or more programs configured to be executed by the hardware processor, the one or more programs including instructions for:
transmitting, to a client, a media presentation description according to the MPEG-DASH standard and further including
(i) at least two uniform resource identifiers each identifying a media data representation describing several regions, each of the media data representations comprising,
(ii) media information describing each of the several regions, and
(iii) a quality rank information of each of the several regions,
receiving, from the client, at least one request message to request media data corresponding to one media data representation selected by the user as a function of at least one quality rank of one or more regions and by using the one uniform resource identifier identifying the selected media data representation; and
providing, to the client, the media data corresponding to the selected media data representation according to the at least one request message.

12. The device according to claim 10 or claim 11, wherein the quality rank information is described in a SupplementalProperty element with a specific @shemeIdUri.

13. The device according to claim 10 or claim 11, wherein the region is a 2D region.

14. A computer program for a programmable apparatus, the computer program comprising instructions for carrying out, when the program is loaded and executed by a programmable apparatus, each step of a method comprising:
receiving, from a server, a media presentation description according to the MPEG-DASH standard and further including
(i) at least two uniform resource identifiers each identifying a media data representation describing several regions, each of the media data representations comprising,
(ii) media information describing each of the several regions, and
(iii) a quality rank information of each of the several regions,
selecting one media data representation as a function of at least one quality rank information of one or more of the several regions;
sending, to the server, at least one request message to request media data corresponding to the selected media data representation by using the one uniform resource identifier identifying the selected media data representation; and
receiving, from the server, the media data corresponding to the selected media data representation according to the at least one request message.

15. A computer program for a programmable apparatus, the computer program comprising instructions for carrying out, when the program is loaded and executed by a programmable apparatus, each step of a method comprising:
transmitting, to a client, a media presentation description according to the MPEG-DASH standard and further including
(i) at least two uniform resource identifiers each identifying a media data representation describing several regions, each of the media data representations comprising,
(ii) media information describing each of the several regions, and
(iii) a quality rank information of each of the several regions,
receiving, from the client, at least one request message to request media data corresponding to one media data representation selected by the user as a function of at least one quality rank of one or more regions and by using the one uniform resource identifier identifying the selected media data representation; and
providing, to the client, the media data corresponding to the selected media data representation according to the at least one request message.

16. The computer program according to claim 14 or claim 15, wherein the quality rank information is described in a SupplementalProperty element with a specific @shemeIdUri.

## Patentansprüche

1. Verfahren, zum Empfangen von Mediendaten, die ein omnidirektionales Medienformat erfüllen, wobei das Verfahren aufweist:
Empfangen einer Medien-Präsentations-Beschreibung nach dem MPEG-DASH Standard von einem Server, die zudem umfasst:
(i) mindestens zwei Uniform Resource Identifier, wovon jeder eine Mediendaten-Repräsentation identifiziert, die verschiedene Bereiche beschreiben, wobei jede der Mediendaten-Repräsentationen aufweist:
(ii) Medien-Informationen, die jeden der verschiedenen Bereiche beschreiben, und
(iii) eine Qualitäts-Rang-Information für jeden der verschiedenen Bereiche,
Auswählen einer Mediendaten-Repräsentation als eine Funktion von mindestens einer Qualitäts-Rang-Information von einem oder mehreren der verschiedenen Bereiche;
Senden mindestens einer Anfrage-Nachricht an den Server, um Mediendaten anzufragen, die der ausgewählten Mediendaten-Repräsentation entsprechend, durch verwenden des einen Uniform Resource Identifiers, der die ausgewählte Mediendaten-Repräsentation identifiziert; und
Empfangen der der ausgewählten Mediendaten-Repräsentation entsprechenden Mediendaten von dem Server gemäß der mindestens einen Anfrage-Nachricht.

2. Verfahren nach Anspruch 1 wobei die Qualitäts-Rang-Informationen in einer Anpassungssatz-Stufe oder einer Wiedergabe-Stufe vorliegen.

3. Verfahren nach Anspruch 1 wobei die Medien-Präsentations-Beschreibung zudem Sichtfeld-Informationen umfasst.

4. Verfahren zum Bereitstellen von Mediendaten, die ein omnidirektionales Medienformat erfüllen, wobei das Verfahren aufweist:
Senden einer Medien-Präsentations-Beschreibung nach dem MPEG-DASH Standard zu einem Client, die zudem umfasst:
(i) mindestens zwei Uniform Resource Identifier, wovon jeder eine Mediendaten-Repräsentation identifiziert, die verschiedene Bereiche beschreiben, wobei jede der Mediendaten-Repräsentationen aufweist:
(ii) Medien-Informationen, die jeden der verschiedenen Bereiche beschreiben, und
(iii) eine Qualitäts-Rang-Information von jedem der verschiedenen Bereiche,
Empfangen mindestens einer Anfrage-Nachricht von dem Client, um Mediendaten anzufragen, die einer Mediendaten-Repräsentation entsprechen, die der Nutzer als eine Funktion von mindestens einem Qualitätsrang von einem oder mehreren Bereichen ausgewählt hat und durch verwenden des einen Uniform Resource Identifiers, der die ausgewählte Mediendaten-Repräsentation identifiziert; und
Bereitstellen der der ausgewählten Mediendaten-Repräsentation entsprechenden Mediendaten an den Client gemäß der mindestens einen Anfrage-Nachricht.

5. Verfahren nach Anspruch 1 oder 4 wobei die Qualitäts-Rang-Informationen in einem Zusatz-Eigenschaft-Element mit einer spezifischen @shemeIdUri beschrieben sind.

6. Verfahren nach Anspruch 1 oder 4 wobei der Bereich ein 2D- Bereich ist.

7. Verfahren nach Anspruch 1 oder 4 wobei der Bereich eine geometrische Projektion der Mediendaten auf eine 3D-geometrische Anzeige wiedergibt.

8. Verfahren nach Anspruch 7 wobei der Bereich eine geometrische Projektion der Mediendaten auf mindestens einen Teil einer Sphäre repräsentiert.

9. Verfahren nach Anspruch 8 wobei der Teil der Sphäre durch Gier-, Neigungs- und Rollwerte, einen horizontalen Sichtfeld-Winkel, und einen vertikalen Sichtfeld-Winkel gekennzeichnet wird.

10. Client-Vorrichtung zum Empfangen von Mediendaten, die ein omnidirektionales Medienformat erfüllen, wobei die Client-Vorrichtung aufweist:
einen Hardware-Prozessor; und
einen Speicher, der ein oder mehrere Programme speichert, die eingerichtet sind, um von dem Hardware-Prozessor ausgeführt zu werden, wobei die ein oder mehrere Programme Anweisungen aufweisen für:
Empfangen einer Medien-Präsentations-Beschreibung nach dem MPEG-DASH Standard von einem Server, die zudem umfasst:
(i) mindestens zwei Uniform Resource Identifier, wovon jeder eine Mediendaten-Repräsentation identifiziert, die verschiedene Bereiche beschreiben, wobei jede der Mediendaten-Repräsentationen aufweist:
(ii) Medien-Informationen, die jeden der verschiedenen Bereiche beschreiben, und
(iii) eine Qualitäts-Rang-Information für jeden der verschiedenen Bereiche,
Auswählen einer Mediendaten-Repräsentation als eine Funktion von mindestens einer Qualitäts-Rang-Information von einem oder mehreren der verschiedenen Bereiche;
Senden mindestens einer Anfrage-Nachricht an den Server, um Mediendaten anzufragen, die der ausgewählten Mediendaten-Repräsentation entsprechend, durch verwenden des einen Uniform Resource Identifiers, der die ausgewählte Mediendaten-Repräsentation identifiziert; und
Empfangen der der ausgewählten Mediendaten-Repräsentation entsprechenden Mediendaten von dem Server gemäß der mindestens einen Anfrage-Nachricht.

11. Server-Vorrichtung zum Bereitstellen von Mediendaten, die ein omnidirektionales Medienformat erfüllen, wobei die Server-Vorrichtung aufweist:
einen Hardware-Prozessor; und
einen Speicher, der ein oder mehrere Programme speichert, die eingerichtet sind, um von dem Hardware-Prozessor ausgeführt zu werden, wobei die ein oder mehrere Programme Anweisungen aufweisen für:
Senden einer Medien-Präsentations-Beschreibung nach dem MPEG-DASH Standard zu einem Client, die zudem umfasst:
(i) mindestens zwei Uniform Resource Identifier, wovon jeder eine Mediendaten-Repräsentation identifiziert, die verschiedene Bereiche beschreiben, wobei jede der Mediendaten-Repräsentationen aufweist:
(ii) Medien-Informationen, die jeden der verschiedenen Bereiche beschreiben, und
(iii) eine Qualitäts-Rang-Information für jeden der verschiedenen Bereiche,
Empfangen mindestens einer Anfrage-Nachricht von dem Client, um Mediendaten anzufragen, die einer Mediendaten-Repräsentation entsprechen, die der Nutzer als eine Funktion von mindestens einem Qualitätsrang von einem oder mehreren Bereichen ausgewählt hat und durch verwenden des einen Uniform Resource Identifiers, der die ausgewählte Mediendaten-Repräsentation identifiziert; und
Bereitstellen der der ausgewählten Mediendaten-Repräsentation entsprechenden Mediendaten an den Client gemäß der mindestens einen Anfrage-Nachricht.

12. Vorrichtung nach Anspruch 10 oder Anspruch 11, wobei die Qualitäts-Rang-Informationen in einem Zusatz-Eigenschaft-Element mit einer spezifischen @shemeIdUri beschrieben sind.

13. Vorrichtung nach Anspruch 10 oder Anspruch 11 wobei der Bereich ein 2D-Bereich ist.

14. Computerprogramm für einen programmierbaren Apparat, wobei das Computerprogramm Anweisungen zum Ausführen aufweist, wenn das Programm durch einen programmierbaren Apparat geladen und ausgeführt wird, wobei jeder Schritt eines Verfahrens aufweist:
Empfangen einer Medien-Präsentations-Beschreibung nach dem MPEG-DASH Standard von einem Server, die zudem umfasst:
(i) mindestens zwei Uniform Resource Identifier, wovon jeder eine Mediendaten-Repräsentation identifiziert, die verschiedene Bereiche beschreiben, wobei jede der Mediendaten-Repräsentationen aufweist:
(ii) Medien-Informationen, die jeden der verschiedenen Bereiche beschreiben, und
(iii) eine Qualitäts-Rang-Information für jeden der verschiedenen Bereiche,
Auswählen einer Mediendaten-Repräsentation als eine Funktion von mindestens einer Qualitäts-Rang-Information von einem oder mehreren der verschiedenen Bereiche;
Senden mindestens einer Anfrage-Nachricht an den Server, um Mediendaten anzufragen, die der ausgewählten Mediendaten-Repräsentation entsprechend, durch verwenden des einen Uniform Resource Identifiers, der die ausgewählte Mediendaten-Repräsentation identifiziert; und
Empfangen der der ausgewählten Mediendaten-Repräsentation entsprechenden Mediendaten von dem Server gemäß der mindestens einen Anfrage-Nachricht.

15. Computerprogramm für einen programmierbaren Apparat, wobei das Computerprogramm Anweisungen zum Ausführen aufweist, wenn das Programm durch einen programmierbaren Apparat geladen und ausgeführt wird, wobei jeder Schritt eines Verfahrens aufweist:
Senden einer Medien-Präsentations-Beschreibung nach dem MPEG-DASH Standard zu einem Client, die zudem umfasst:
(i) mindestens zwei Uniform Resource Identifier, wovon jeder eine Mediendaten-Repräsentation identifiziert, die verschiedene Bereiche beschreiben, wobei jede der Mediendaten-Repräsentationen aufweist:
(ii) Medien-Informationen, die jeden der verschiedenen Bereiche beschreiben, und
(iii) eine Qualitäts-Rang-Information für jeden der verschiedenen Bereiche,
Empfangen mindestens einer Anfrage-Nachricht von dem Client, um Mediendaten anzufragen, die einer Mediendaten-Repräsentation entsprechen, die der Nutzer als eine Funktion von mindestens einem Qualitätsrang von einem oder mehreren Bereichen ausgewählt hat und durch verwenden des einen Uniform Resource Identifiers, der die ausgewählte Mediendaten-Repräsentation identifiziert; und
Bereitstellen der der ausgewählten Mediendaten-Repräsentation entsprechenden Mediendaten an den Client gemäß der mindestens einen Anfrage-Nachricht.

16. Computerprogramm nach Anspruch 14 oder Anspruch 15, wobei die Qualitäts-Rang-Informationen in einem Zusatz-Eigenschaft-Element mit einer spezifischen @shemeIdUri beschrieben sind.

## Revendications

1. Procédé pour recevoir des données multimédia conformes à un format multimédia omnidirectionnel, le procédé comprenant :
la réception, à partir d'un serveur, d'une description de présentation multimédia selon la norme MPEG-DASH, et comportant en outre
(i) au moins deux identifiants de ressources uniformes identifiant chacun une représentation de données multimédia décrivant plusieurs régions, chacune des représentations de données multimédia comprenant :
(ii) des informations multimédia décrivant chacune des plusieurs régions, et
(iii) une information de rang de qualité de chacune des plusieurs régions,
la sélection d'une représentation de données multimédia en fonction d'au moins une information de rang de qualité d'une ou plusieurs des plusieurs régions ;
la transmission, au serveur, d'au moins un message de demande pour demander des données multimédia correspondant à la représentation de données multimédia sélectionnée en utilisant l'identifiant de ressource uniforme identifiant la représentation de données multimédia sélectionnée ; et
la réception, à partir du serveur, des données multimédia correspondant à la représentation de données multimédia sélectionnée selon l'au moins un message de demande.

2. Procédé selon la revendication 1, dans lequel l'information de rang de qualité est présente à un niveau d'ensemble d'adaptation ou à un niveau de représentation.

3. Procédé selon la revendication 1, dans lequel la description de présentation multimédia comporte en outre des informations de champ de vision.

4. Procédé pour fournir des données multimédia conformes à un format multimédia omnidirectionnel, le procédé comprenant :
la transmission, à un client, d'une description de présentation multimédia selon la norme MPEG-DASH, et comportant en outre
(i) au moins deux identifiants de ressources uniformes identifiant chacun une représentation de données multimédia décrivant plusieurs régions, chacune des représentations de données multimédia comprenant,
(ii) des informations multimédia décrivant chacune des plusieurs régions, et
(iii) une information de rang de qualité de chacune des plusieurs régions,
la réception, en provenance du client, d'au moins un message de demande pour demander des données multimédia correspondant à une représentation de données multimédia sélectionnée par l'utilisateur en fonction d'au moins un rang de qualité d'une ou plusieurs régions et en utilisant l'identifiant de ressource uniforme identifiant la représentation de données multimédia sélectionnée ; et
la fourniture, au client, des données multimédia correspondant à la représentation de données multimédia sélectionnée selon l'au moins un message de demande.

5. Procédé selon la revendication 1 ou la revendication 4, dans lequel l'information de rang de qualité est décrite dans un élément de propriété supplémentaire avec un @shemeldUri spécifique.

6. Procédé selon la revendication 1 ou la revendication 4, dans lequel la région est une région 2D.

7. Procédé selon la revendication 1 ou la revendication 4, dans lequel la région représente une projection géométrique des données multimédia sur un affichage géométrique 3D.

8. Procédé selon la revendication 7, dans lequel la région représente une projection géométrique des données multimédia sur au moins une partie d'une sphère.

9. Procédé selon la revendication 8, dans lequel la partie de la sphère est **caractérisée par** des valeurs de tangage, de lacet et de roulis, un angle de champ de vision horizontal et un angle de champ de vision vertical.

10. Dispositif client pour recevoir des données multimédia conformes à un format multimédia omnidirectionnel, le dispositif client comprenant :
un processeur matériel ; et
une mémoire stockant un ou plusieurs programmes configurés pour être exécutés par le processeur matériel, les un ou plusieurs programmes comportant des instructions pour :
recevoir, à partir d'un serveur, une description de présentation de multimédia selon la norme MPEG-DASH, et comportant en outre
(i) au moins deux identifiants de ressources uniformes identifiant chacun une représentation de données multimédia décrivant plusieurs régions, chacune des représentations de données multimédia comprenant,
(ii) des informations de multimédia décrivant chacune des plusieurs régions, et
(iii) une information de rang de qualité de chacune des plusieurs régions,
sélectionner une représentation de données multimédia en fonction d'au moins une information de rang de qualité d'une ou plusieurs des plusieurs régions ;
envoyer, au serveur, au moins un message de demande pour demander des données multimédia correspondant à la représentation de données multimédia sélectionnée en utilisant l'identifiant de ressource uniforme identifiant la représentation de données multimédia sélectionnée ; et
recevoir, à partir du serveur, les données multimédia correspondant à la représentation de données multimédia sélectionnée selon l'au moins un message de demande.

11. Dispositif serveur pour fournir des données multimédia conformes à un format multimédia omnidirectionnel, le dispositif serveur comprenant :
un processeur matériel ; et
une mémoire stockant un ou plusieurs programmes configurés pour être exécutés par le processeur matériel, les un ou plusieurs programmes comportant des instructions pour :
transmettre, à un client, une description de présentation multimédia selon la norme MPEG-DASH, et comportant en outre
(i) au moins deux identifiants de ressources uniformes identifiant chacun une représentation de données multimédia décrivant plusieurs régions, chacune des représentations de données multimédia comprenant,
(ii) des informations multimédia décrivant chacune des plusieurs régions, et
(iii) une information de rang de qualité de chacune des plusieurs régions,
recevoir, en provenance du client, au moins un message de demande pour demander des données multimédia correspondant à une représentation de données multimédia sélectionnée par l'utilisateur en fonction d'au moins un rang de qualité d'une ou plusieurs régions et en utilisant l'identifiant de ressource uniforme identifiant la représentation de données multimédia sélectionnée ; et
fournir, au client, les données multimédia correspondant à la représentation de données multimédia sélectionnée selon l'au moins un message de demande.

12. Dispositif selon la revendication 10 ou la revendication 11, dans lequel l'information de rang de qualité est décrite dans un élément de propriété supplémentaire avec un @shemeldUri spécifique.

13. Dispositif selon la revendication 10 ou la revendication 11, dans lequel la région est une région 2D.

14. Programme informatique pour un appareil programmable, le programme informatique comprenant des instructions pour effectuer, lorsque le programme est chargé et exécuté par un appareil programmable, chaque étape d'un procédé comprenant :
la réception, à partir d'un serveur, d'une description de présentation multimédia selon la norme MPEG-DASH, et comportant en outre
(i) au moins deux identifiants de ressources uniformes identifiant chacun une représentation de données multimédia décrivant plusieurs régions, chacune des représentations de données multimédia comprenant,
(ii) des informations multimédia décrivant chacune des plusieurs régions, et
(iii) une information de rang de qualité de chacune des plusieurs régions,
la sélection d'une représentation de données multimédia en fonction d'au moins une information de rang de qualité d'une ou plusieurs des plusieurs régions ;
la transmission, au serveur, d'au moins un message de demande pour demander des données multimédia correspondant à la représentation de données multimédia sélectionnée en utilisant l' identifiant de ressource uniforme identifiant la représentation de données multimédia sélectionnée ; et
la réception, à partir du serveur, des données multimédia correspondant à la représentation de données multimédia sélectionnée selon l'au moins un message de demande.

15. Programme informatique pour un appareil programmable, le programme informatique comprenant des instructions pour effectuer, lorsque le programme est chargé et exécuté par un appareil programmable, chaque étape d'un procédé comprenant :
la transmission, à un client, d'une description de présentation de multimédia selon la norme MPEG-DASH, et comportant en outre
(i) au moins deux identifiants de ressources uniformes identifiant chacun une représentation de données multimédia décrivant plusieurs régions, chacune des représentations de données multimédia comprenant,
(ii) des informations multimédia décrivant chacune des plusieurs régions, et
(iii) une information de rang de qualité de chacune des plusieurs régions,
la réception, en provenance du client, d'au moins un message de demande pour demander des données multimédia correspondant à une représentation de données multimédia sélectionnée par l'utilisateur en fonction d'au moins un rang de qualité d'une ou plusieurs régions et en utilisant l'identifiant de ressource uniforme identifiant la représentation de données multimédia sélectionnée ; et
la fourniture, au client, des données multimédia correspondant à la représentation de données multimédia sélectionnée selon l'au moins un message de demande.

16. Programme informatique selon la revendication 14 ou la revendication 15, dans lequel l'information de rang de qualité est décrite dans un élément de propriété supplémentaire avec un @shemeldUri spécifique.
